Europäisches Patentamt

European Patent Office

Office européen des brevets

(19)

(11) Veröffentlichungsnummer: **0 164 641**
**B1**

# (12) EUROPÄISCHE PATENTSCHRIFT

(45) Veröffentlichungstag der Patentschrift: **05.09.90**

(21) Anmeldenummer: **85106553.2**

(22) Anmeldetag: **29.05.85**

(51) Int. Cl.⁵: **B 29 B 9/06**, B 29 C 45/00

(54) Verfahren zur Herstellung von Polycarbonat-Spritzgussformkörpern.

(30) Priorität: **09.06.84 DE 3421647**

(43) Veröffentlichungstag der Anmeldung:
**18.12.85 Patentblatt 85/51**

(45) Bekanntmachung des Hinweises auf die
Patenterteilung:
**05.09.90 Patentblatt 90/36**

(84) Benannte Vertragsstaaten:
**DE FR GB IT NL**

(56) Entgegenhaltungen:
**DE-B-1 137 167**
**DE-B-1 190 167**
**DE-C- 714 708**
**US-A-3 007 204**

(73) Patentinhaber: **BAYER AG
D-5090 Leverkusen 1 Bayerwerk (DE)**

(72) Erfinder: **Fritsch, Karl-Herbert, Dr.
Hackberg 25
D-5060 Bergisch Gladbach 1 (DE)**
Erfinder: **Bier, Peter, Dr.
Bodelschwinghstrasse 18
D-4150 Krefeld (DE)**

**Die Akte enthält technische Angaben, die nach
dem Eingang der Anmeldung eingereicht
wurden und die nicht in dieser Patentschrift
enthalten sind.**

Courier Press, Leamington Spa, England.

EP 0 164 641 B1

**Beschreibung**

Gegenstand der vorliegenden Erfindung ist ein Verfahren zur Herstellung von thermoplastischen aromatischen Polycarbonat-Spritzgußformkörpern aus Polycarbonatschmelzsträngen, das dadurch gekennzeichnet ist, daß man Polycarbonatschmelzstränge durch eine runde Öffnung mit 1 bis 8 mm, vorzugsweise mit 2 bis 6 mm Durchmesser preßt, danach auf unterhalb ihres Erweichungspunktes abkühlt, zwischen Raumtemperatur und Erweichungspunkt des erhaltenen Polycarbonatstranges diesen im Verhältnis zwischen 1:1,5 und 1:8, vorzugsweise zwischen 1:1,5 und 1:5 reckt, dann granuliert und das erhaltene Polycarbonatgranulat in bekannter Weise nach dem Spritzgußverfahren bei Produkttemperaturen von 180°C bis unterhalb von 320°C, vorzugsweise unterhalb von 300°C verarbeitet.

Das Recken von Polycarbonatfäden und von Polycarbonatfolien ist bekannt. Eine weitere, daran anschließende Formgebung oder Weiterverarbeitung ist bei dieser Technologie nicht geläufig. (Siehe beispielsweise US-Patent 300 52 36).

In den beiden deutschen Auslegeschriften Nr. 1190 167 und Nr. 1164 644 ist die Herstellung verstreckter Gebilde beschrieben, wobei jedoch nur Filme, Folien und Fasern konkret anggesprochen sind.

Die Verstreckung von anderen Polycarbonatgebilden ist lediglich für Polycarbonatplatten geläufig, was durch Walzen der Polycarbonatplatten erreicht wird.

Im US-Patent 300 72 04, Spalte 1, Zeilen 20 bis 33 wird zwar generell das Verstrecken von Kunststoffen beschrieben, im nachfolgenden Detail wird jedoch wiederum nur auf faserförmige und folienförmige Gebilde eingegangen.

US-Patent 3796 785 beschreibt ein spezielles Verfahren zum Verstrecken von thermoplastischen Platten, deren Dicke jedoch wiederum im Bereich der üblichen Folien liegt, nämlich vorzugsweise bei 0,07 mm und in gestreckten Zustand bei 0,02 mm.

Das Strecken von thermoplastischen Platten mit Dicken von 0,7 mm oder mehr ist also aus US-Patent 3796 785 nicht bekannt.

Thermoplastische Spritzgußformkörper im Sinne der Erfindung sind Formkörper, die nach dem Spritzgußverfahren hergestellt werden können und eine Dicke von mindestens 0,7 mm haben; sie unterscheiden sich damit von Folien, die nur extrudiert oder gegossen werden können, von Fasern, die nur extrudiert oder versponnen werden können, und von solchen Platten, die nur extrudiert werden können oder eine Dicke von weniger als 0,7 mm haben.

Bevorzugte thermoplastische Spritzgußformkörper im Sinne der Erfindung sind solche, die nur nach dem Spritzgußverfahren hergestellt werden können.

Die bevorzugte Dicke thermoplastischen Spritzgußformkörper soll zwischen 0,7 mm und 8 mm liegen.

Die Länge und die Breite der thermoplastischen Spritzgußformkörper sind im Prinzip beliebig und richten sich nach dem Spritzgußwerkzeug und der beabsichtigten Verwendung. Länge und Breite sind jedoch definitionsgemäß beide größer als die Mindestdicke von 0,7 mm. Beispielhafte Werte für die Länge liegen zwischen 5 mm und 2 500 mm; beispielhafte Werte für die Breite liegen zwischen 2 mm und 500 mm.

Die Herstellung von Polycarbonatschmelzsträngen, beispielsweise aus Polycarbonatgranulat, -pulver oder -lösung ist geläufig. Sie können beispielsweise über einen Extruder bei Temperaturen zwischen 180°C und 400°C hergestellt werden. Ein- oder Zweiwellenmischextruder sind beispielsweise geeignet; Spinnpumpen wie beispielsweise Zahnradpumpen können auch in bekannter Weise verwendet werden.

Das Pressen durch eine runde Öffnung von 1 bis 8 mm Durchmesser kann beispielsweise bei Temperaturen von 180°C bis 400°C und unter Anwendung von Drücken von 0,5 atm bis 200 atm (49 KPa—600 KPa) erfolgen. Öffnungen im Sinne des erfindungsgemäßen Verfahrens sind ein- oder mehrfache Runddüsen.

Die Abkühlung des Polycarbonatschmelzstranges erfolgt durch Luft oder vorzugsweise durch Hindurchleiten durch ein Wasserbad. Die Wassertemperatur beträgt dabei beispielsweise 10—60°C.

Der bevorzugte Temperaturbereich für das anschließende Recken, auf den die Abkühlung der Polycarbonatschmelzstranges erfolgt, ist zwischen 80 und 150°C beziehungsweise bei kristallinen Polycarbonaten bei 186—230°C.

Das Recken des abgekühlten Polycarbonatstranges kann nach Methoden erfolgen, wie sie für das Recken von Folien oder Fasern geläufig und bekannt sind. Als Reckanlagen kommen beispielsweise solche in Frage, die im Kunststoff-Handbuch, Band VI/"Polyamide", 1966, Carl-Hanser-Verlag, Seiten 336 bis 343, beschrieben sind. So können beispielsweise Bisphenol-A-Polycarbonate bei Temperaturen zwischen 80°C und 230°C auf einer Reckmaschine der Firma Reifenhäuser KG, Typ RS 13, im ein oder mehrmaligen Reck- und Temperaturstufen im Verhältnis gemäß vorliegender Erfindung gereckt werden.

Der gereckte Strang wird mit üblichen Granulatoren wie sie z.B. die Firmen Automatik, Dreher, Condux und Cumberland anbieten, in bekannter Weise granuliert. Die Abmessungen des Zylindergranulats liegen beispielsweise bei 0,5—3 mm Dicke und 1—3 mm Länge.

Die Verarbeitung nach dem Spritzgußverfahren kann z.B. auf Standard-Spritzgußmaschinen, wie sie für Thermoplaste benutzt werden, erfolgen. Dabei liegt due Produkttemperatur unterhalb von 320°C, vorzugsweise unterhalb von 300°C; die untere Temperaturgrenze für das Spritzgußverfahren ist 180°C, vorzugsweise 240°C.

Zur herstellung des Polycarbonatschmelzstranges, d.h. für das erfindungsgemäße Verfahren einsetzbare thermoplastische aromatischen Polycarbonate sind solche auf Basis von Diphenolen mit $\bar{M}w$ (Gewichtsmittelmolekulargewicht ermittelt über Lichtstreuung oder über die relative Lösungsviskosität in $CH_2Cl_2$ bei Raumtemperatur und einer Konzentration von 0,5 g pro 100 ml $CH_2Cl_2$) zwischen 10 000 und 100 000, vorzugsweise zwischen 15 000 und 80 000 und insbesondere zwischen 20 000 und 50 000.

Diese thermoplastischen, aromatischen Polycarbonate können linear oder verzweigt sein, beispielsweise in bekannter Weise durch den Einbau geringer Mengen, vozugsweise von 0,5 bis 2 Mol-%, bezogen auf eingesetzte Diphenole, an drei- oder mehr als dreifunktionellen Verbindungen, beispielweise von solchen mit drei oder mehr als drei phenolischen OH-Gruppen.

Sowohl die linearen als auch die verzweigten, thermoplastischen aromatischen Polycarbonate sind literaturbekannt.

Den hochmolekularen, thermoplastischen, aromatischen Polycarbonaten mit $\bar{M}w$ zwischen 10000 und 100000 können noch niedermolekulare, aromatische Polycarbonaten mit mittleren Polymerisationsgraden zwisch 2 und 30 in Mengen bis zu 30 Gew.-% zugemischt sein.

Zur Einstellung des Molekulargewichts $\bar{M}_w$ der Polycarbonate werden in bekannter Weise Kettenabbrecher, wie beispielsweise Phenol, Halogenphenole oder Alkylphenole, in den berechneten Mengen eingesetzt.

Zur Herstellung der erfindungsgemäß verwendbaren aromatischen Polycarbonate geeignete Diphenole sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-sulfoxide, Bis(hydroxyphenyl)-sulfone und α,α'-Bis(hydroxyphenyl)diisopropylbenzole sowie deren kernalkylierte und kernhalogenierte Derivate. Derartige Diphenole sind literaturbekannt.

Bevorzugte Diphenole sind beispielsweise 4,4'-Dihydroxydiphenyl, 2,4-Bis-(4-hydroxyphenyl)-2-methylbutan, α,α'-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, 2,2-Bis-(3-brom-4-hydroxyphenyl)-propan, Bis-(3,5-dimethyl-4-hydroxyphenyl), Bis-(3,5-dimethyl-4-hydroxyphenyl)-alkane wie 2,4-Bis-(3,5-dimethyl-4-hydroxyphenyl)-2-methylbutan, Bis-(3,5-dimethyl-4-hydroxyphenyl)-cycloalkane wie 1,1-Bis-(3,5-dimethyl-4-hydroxyphenyl)-cyclohexan, Bis-(3,5-dimethyl-4-hydroxyphenyl)-ether, α,α'-Bis-(3,5-dimethyl-4-hydroxyphenyl)-p- bzw. -m-diisopropylbenzol und Bis-(3,5-dimethyl-4-hydroxyphenyl)-sulfon.

Besonders bevorzugte Diphenole sind beispielsweise 2,2-Bis-(4-hydroxyphenyl)-propan, 2,2-Bis-(3,5-dibrom-4-hydroxyphenyl)-propan, 2,2-Bis-(3,5-dichlor-4-hydroxyphenyl)-propan, 1,1-Bis-(4-hydroxyphenyl)-cyclohexan, Bis-(3,5-dimethyl-4-hydroxyphenyl)-methan und 2,2-Bis-(3,5-dimethyl-4-hydroxyphenyl)-propan.

Diese Diphenole sind entweder literaturbekannt (siehe beispielsweise H. Schnell, "Chemistry and Physics of Polycarbonates", Interscience Publishers, New York, 1964, US-PS 3028 365 oder US-PS 3879 348) oder nach literaturbekannten Verfahren herstellbar.

Für das erfindungsgemäße Verfahren geeignete thermoplastische, aromatische Polycarbonate sind Homopolycarbonate und Copolycarbonate aus den vorstehend aufgeführten Diphenolen. Geeignet sind auch Mischungen dieser Homopolymercarbonate oder dieser Copolycarbonate oder von diesen Homopolycarbonaten mit diesen Copolycarbonaten.

Besonders bevorzugte Homo- beziehungsweise Copolycarbonate sind solche aus den als besonders bevorzugt genannten Diphenolen, wobei die Polycarbonate auf Basis von 2,2-Bis-(4-hydroxyphenyl)-propan als Homopolycarbonate und als Copolycarbonate mit bis zu 10 Mol-%, bezogen auf Mole Diphenole, an anderen besonders bevorzugten Diphenolen die ganz besonders bevorzugten thermoplastischen, aromatischen Polycarbonate sind.

Den thermoplastischen, aromatischen Polycarbonaten können die üblichen Zusätze wie Gleitmittel, Entformungsmittel, Keimbildner, Stabilisatoren gegen Feuchtigkeit, gegen Hitze und UV-Einwirkung, Flammschutzmittel und Farbstoffe in den in der Polycarbonatchemie üblichen Mengen zugesetzt sein oder bei der Herstellung des Polycarbonatschmelzstranges für das erfindungsgemäße Verfahren eingearbeitet werden.

Das erfindungsgemäße Verfahren erlaubt in einfacher Weise das Eigenschaftsbild von thermoplastischen Spritzgußformkörpern aus aromatischen, thermoplastischen Polycarbonaten zu verbessern und dabei wine Vielzahl von verschiedenen Formgestaltungen der Polycarbonatformkörper zu erzielen.

Die technische Verwendung der nach dem erfindungsgemäßen Verfahren hergestellten thermoplastischen Spritzgußformkörper erfolgt in bekannter Weise überall dort, wo bereits bislang Polycarbonatspritzgußformkörper Verwendung finden, also beispielsweise beim Bau von Elektrogeräten, Haushaltswaren und im Automobilsektor.

Beispiel

Ein Homopolycarbonat aus Bis-2,2-(4-hydroxyphenyl)-propan mit einer relativen Viskosität von 1,30 (gemessen an einer 0,5 %igen Lösung in Methylenchlorid bei 25°C in einem Ubbelohde Viskosimeter) wurde in einem Zweiwellenextruder des Typs ZSK 30 der Fa. Werner & Pfleiderer aufgeschmolzen und durch eine 4 mm Runddüse extrudiert. Die Produkttemperatur betrug 285°C. Der Schmelzestrang würde in einem Wasserbad abgekühlt auf eine Temperatur von etwa 35°C und in einer Reckanlage nach dem Walzenreckverfahren gereckt. Die Reckanlage bestand aus drei chromierten senkrecht

EP 0 164 641 B1

aufeinanderstehenden Walzenpaaren mit einem Walzendurchmesser von 25 cm. Die Walzenpaare können separat angetrieben werden. Der Strang wird durch zwei Heizzonen, die zwischen den Walzenpaaren liegen, geführt. Die Temperatur der Heizzonen kann zwischen 20°C und 300°C eingestellt werden. Im vorliegenden Fall wurde die Umfangsgeschwindigkeit zwischen dem ersten Walzenpaar und dem zweiten so gewählten, daß ein Reckverhältnis von 1:2 resultierte. Die Temperatur der Heizzonen betrug 140°C. Das dritte Walzenpaar wurde ausschließlich zum Transport des Stranges benutzt. Der Strang wurde mit einem Granulator ASG 2 der Fa. Automatik granuliert und das Granulat auf einer Spritzgußmaschine der Fa. Arburg (Modell 270) bei 300°C zu Prüfkörpern verspritzt. Die daran gemessene Reißfestigkeit und Reißdehnung (DIN 53444) sind in Tabelle 1 mit den von entsprechenden Prüfkörpern verglichen, die aus dem Granulat des ungereckten Schmelzstranges mittels Spritzguß hergestellt worden sind.

TABELLE 1

| | | Reckbedingungen | | Reißfestigkeit (MPa) | Reißdehnung (%) |
|---|---|---|---|---|---|
| | Produkt | Temperatur (°C) | Reckverhältnis | | |
| Beispiel | Prüfkörper aus gerecktem Material | 140 | 1:2 | 83,0 | 121 |
| Vergleichs-beispiel | Prüfkörper aus ungerecktem Material | — | — | 74,0 | 110 |

## Patentansprüche

1. Verfahren zur Herstellung von thermoplastischen aromatischen Polycarbonat-Spritzgußformkörpern mit einer Dicke von mindestens 0,7 mm aus Polycarbonatschmelzsträngen, das dadurch gekennzeichnet ist, daß man Polycarbonatschmelzstränge durch eine runde Öffnung mit 1 bis 8 mm Durchmesser preßt, danach auf unterhalb ihres Erweichungspunktes abkühlt, zwischen Raumtemperatur und Erweichungspunkt des erhaltenen Polycarbonatstranges diesen im Verhältnis zwischen 1:1,5 bis 1:8 reckt, dann granuliert und das erhaltene Polycarbonatgranulat in bekannter Weise nach dem Spritzgußverfahren bei Produkttemperaturen von 180°C bis unterhalb von 320°C verarbeitet.

2. Verfahren gemäß Anspruch 1, dadurch gekennzeichnet, daß man den Polycarbonatstrang im Verhältnis zwischen 1:1,5 und 1:5 reckt.

3. Verfahren gemäß Ansprüche 1 und 2, dadurch gekennzeichnet, daß man bei Produkttemperaturen unterhalb von 300°C verarbeitet.

## Revendications

1. Procédé pour la fabrication de corps moulés par injection en polycarbonates aromatiques thermoplastiques à une épaisseur d'au moins 0,7 mm à partir de boudins fondus de polycarbonates, caractérisé en ce que l'on refoule les boudins fondus de polycarbonates au travers d'un orifice circulaire de 1 à 8 mm de diamètre, on les refroidit ensuite au-dessous de leur point de ramollissement, on les soumet à un étirage à un rapport de 1:1,5 à 1:8 entre la température ambiante et leur point de ramollissement, on les met à l'état de granulés et on façonne les granulés de polycarbonates de manière connue par la technique de moulage par injection à des températures du produit allant de 180°C jusqu'à moins de 320°C.

2. Procédé selon la revendication 1, caractérisé en ce que l'on étire le boudin de polycarbonate à un rapport de 1:1,5 à 1:5.

3. Procédé selon les revendications 1 et 2, caractérisé en ce que l'on façonne à des températures de produit inférieures à 300°C.

## Claims

1. A process for the production of thermoplastic aromatic polycarbonate injection-moulded articles having a thickness of at least 0.7 mm from polycarbonate melt strands, characterized in that polycarbonate melt strands are pressed through a 1 to 8 mm diameter round opening, subsequently cooled to below their softening point, the polycarbonate strand obtained is stretched in a ratio of 1:1.5 to 1:8 at a temperature between room temperature and its softening point and then granulated and the polycarbonate granules obtained are injection-moulded in known manner at product temperatures of 180°C to below 320°C.

4

2. A process as claimed in claim 1, characterized in that the polycarbonate strand is stretched in a ratio of 1:1.5 to 1:5.

3. A process as claimed in claims 1 and 2, characterized in that injection moulding is carried out at product temperatures below 300°C.